# EUROPEAN PATENT APPLICATION

(11) **EP 4 745 739 A1**
(43) Date of publication of application: **20.05.2026**
(21) Application number: 25215486.9
(22) Date of filing: 13.11.2025
(51) Int. Cl.: G06F 3/0482, G06F 3/04842, G06F 3/0485

(54) **AN INFORMATION PROCESSING PROGRAM, AN INFORMATION PROCESSING APPARATUS, AND AN INFORMATION PROCESSING METHOD**

(30) Priority: 19.11.2024 JP 2024201469
(71) Applicant: Nintendo Co., Ltd., Kyoto 601-8501 (JP)
(72) Inventor: KISHITA, Kazuki, Kyoto, 601-8501 (JP); KIWADA, Shinpei, Kyoto, 601-8501 (JP)
(74) Representative: Bardehle Pagenberg Partnerschaft mbB Patentanwälte Rechtsanwälte

(57) **Abstract**

A non-transitory computer-readable storage medium having stored therein instructions that, when executed by one or more processor of an information processing apparatus, cause the information processing apparatus to perform operations comprising: generating, as a content image, an image of a portion of the content including a plurality of elements that overlaps the display region; moving a reference point based on a user's operation input; moving the display region relative to the content based on a position of the reference point within a control region; moving the control region relative to the content based on a position of the reference point; and determining, among the plurality of elements, an element that has come into a predetermined positional relationship with the reference point as a selection target; wherein the operation of generating the content image further comprises generating the content image in which the selection-target element is visually recognizable as selected.

## Description

### Technical Field

The present disclosure relates to user interface technologies.

### Background Art

Conventionally, information processing apparatuses that move a cursor and scroll a page in response to operations of directional input keys have been known (Japanese Patent Application Publication No. 2003-233450).

### Summary of Invention

### Technical Problem

In conventional information processing apparatuses, there has been room for improvement regarding the behavior of cursor movement and page scrolling in response to a user's operation input.

### Solution to Problem

### (Configuration 1)

An information processing program according to Configuration 1 that, when executed by a computer of an information processing apparatus, causes the computer to function as: an image generation unit configured to generate, as a content image, an image of a portion of the content including a plurality of elements that overlaps the display region; a reference-point movement unit configured to move a reference point based on a user's operation input; a display-region movement unit configured to move the display region relative to the content based on a position of the reference point within a control region; a control-region movement unit configured to move the control region relative to the content based on a position of the reference point; and a selection-target determination unit configured to determine, among the plurality of elements, an element that has come into a predetermined positional relationship with the reference point as a selection target; wherein the image generation unit further generates the content image in which the selection-target element is visually recognizable as selected.

### (Configuration 2)

The information processing program according to Configuration 1, wherein the computer is further configured to function as a first-condition determination unit configured to determine whether a first condition is satisfied based on a user's operation input; wherein the display-region movement unit further moves the display region based at least in part on the reference point having moved within the control region from a first range to a second range; wherein the control-region movement unit further moves the control region based at least in part on movement of the reference point within the control region from a first range within the control region to a second range within the control region; wherein the reference-point movement unit moves the reference point at a predetermined speed regardless of its position within the control region when the first condition is satisfied.

### (Configuration 3)

The information processing program according to Configuration 2, wherein the computer is further configured to function as a second-condition determination unit configured to determine whether a second condition, different from the first condition, is satisfied based on a user's operation input; wherein the reference-point movement unit stops movement of the reference point in response to the second condition no longer being satisfied.

### (Configuration 4)

The information processing program according to Configuration 3, wherein the computer is further configured to function as a third-condition determination unit configured to determine whether a third condition is satisfied, the third condition being satisfied when, upon a predetermined directional input being made by a user, no input in the same direction as the predetermined directional input has been made immediately before the predetermined directional input; wherein the first-condition determination unit determines that the first condition is satisfied when, after a predetermined time has elapsed since a determination that the third condition is satisfied based on a predetermined directional input, an input is made in the same direction as the predetermined directional input; wherein the second-condition determination unit determines that the second condition is satisfied when, upon a predetermined directional input being made, no input in the same direction as the predetermined directional input has been made immediately before the predetermined directional input; and determines that the second condition is no longer satisfied when, after a determination that the second condition is satisfied, a determination is made that no directional input is being made.

### (Configuration 5)

The information processing program according to Configuration 3, wherein the computer is further configured to function as a third-condition determination unit configured to determine whether a third condition is satisfied, the third condition being satisfied when, upon a predetermined directional input being made by a user, no input in the same direction as the predetermined directional input has been made immediately before the predetermined directional input; wherein the first-condition determination unit determines that the first condition is satisfied when, after a predetermined time has elapsed since a determination that the third condition is satisfied based on a predetermined directional input, an input is made in the same direction as the predetermined directional input; wherein the second-condition determination unit determines that the second condition is satisfied when, after a second predetermined time, shorter than the predetermined time, has elapsed since a determination that the third condition is satisfied based on the predetermined directional input, an input is made in the same direction as the predetermined directional input.

### (Configuration 6)

The information processing program according to any of Configuration 2-5, wherein the reference-point movement unit, based on a determination that a predetermined condition is satisfied in response to a user's directional input, further moves the reference point to a position corresponding to an element located in a direction based on the directional input. Here, the "predetermined condition" may be that, when a predetermined directional input is made by the user, no input in the same direction as the predetermined directional input has been made immediately before the predetermined directional input.

### (Configuration 7)

The information processing program according to Configuration 6, wherein the reference-point movement unit, when moving the reference point based on the predetermined condition being satisfied, moves the reference point at a speed faster than the predetermined speed.

### (Configuration 8)

The information processing program according to Configuration 6, wherein, responsive to (i) a determination that the predetermined condition is satisfied and (ii) a subsequent determination that the first condition is satisfied, the reference-point movement unit moves the reference point, based on the determination that the predetermined condition is satisfied, to a position corresponding to an element located in the direction indicated by the directional input at a speed faster than the predetermined speed, and thereafter moves the reference point in the input direction at the predetermined speed.

### (Configuration 9)

The information processing program according to any of Configuration 1-8, wherein the selection-target determination unit determines the element as the selection target when a first selection condition is satisfied, the first selection condition being satisfied when movement of the reference point causes the element's hit-detection region to overlap the reference point; and when the first selection condition is not satisfied as a result of movement of the reference point, determines the element as the selection target when a second selection condition is satisfied, the second selection condition being satisfied when the element's hit-detection region overlaps a region defined by extending from the reference point in a direction perpendicular to a movement direction of the reference point.

### (Configuration 10)

The information processing program according to any of Configuration 1-9, wherein the image generation unit further generates the content image not including the reference point.

### (Configuration 11)

The information processing program according to any of Configuration 1-10, wherein the reference-point movement unit moves the reference point at a speed corresponding to element sizes when the content is of a predetermined type.

### (Configuration 12)

An information processing system, comprising: a processor and a memory coupled thereto, the processor being configured to control the information processing system to at least generate, as a content image, an image of a portion of the content including a plurality of elements that overlaps the display region; move a reference point based on a user's operation input; move the display region relative to the content based on a position of the reference point within a control region; move the control region relative to the content based on a position of the reference point; and determine, among the plurality of elements, an element that has come into a predetermined positional relationship with the reference point as a selection target; wherein generating the content image further comprises generating the content image in which the selection-target element is visually recognizable as selected.

### (Configuration 13)

A processing method performed using a processing system comprising a processor, the processing method comprising: generating, as a content image, an image of a portion of the content including a plurality of elements that overlaps the display region; moving a reference point based on a user's operation input; moving the display region relative to the content based on a position of the reference point within a control region; moving the control region relative to the content based on a position of the reference point; determining, among the plurality of elements, an element that has come into a predetermined positional relationship with the reference point as a selection target; and generating the content image in which the selection-target element is visually recognizable as selected.

The foregoing and other objects, features, aspects and advantages of the exemplary embodiments will become more apparent from the following detailed description of the exemplary embodiments when taken in conjunction with the accompanying drawings.

### Brief Description of Drawings

FIG. 1 is a diagram illustrating a hardware configuration of an information processing apparatus.
FIG. 2 is a diagram illustrating functional blocks of the information processing apparatus.
FIG. 3 is a flowchart illustrating input determination by an input determination unit.
FIG. 4 is a diagram illustrating content, a display region, and a control region.
FIG. 5 is a flowchart illustrating operations for turning ON/OFF constant-speed movement.
FIG. 6 is a flowchart illustrating processing for moving a reference point.
FIG. 7 is a diagram illustrating an example of reference-point movement.

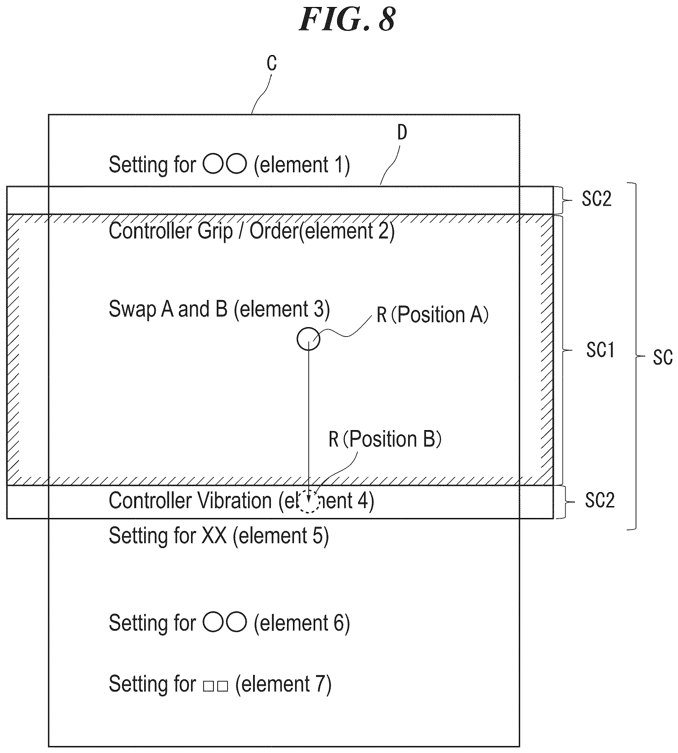

FIG. 8 is a diagram illustrating an example of reference-point movement.
FIG. 9 is a diagram illustrating an example of reference-point movement.
FIG. 10 is a diagram illustrating an example of reference-point movement.
FIG. 11 is a diagram illustrating reference-point movement processing for a slide list.
FIG. 12 is a flowchart illustrating scrolling processing.
FIG. 13 is a diagram for explaining hit detection of a reference point.
FIG. 14A is a diagram illustrating an example of a content image in which it is visually recognizable that an element is selected.
FIG. 14B is a diagram illustrating another example of a content image in which it is visually recognizable that an element is selected.
FIG. 14C is a diagram illustrating another example of a content image in which it is visually recognizable that an element is selected.
FIG. 15 is a flowchart illustrating operations of selection-target determination and image generation.

### Description of Embodiments

Exemplary embodiments of an information processing apparatus and an information processing program according to the present embodiment will be described below with reference to the drawings. The following description merely illustrates preferred examples and is not intended to limit the invention as set forth in the claims.

### [Hardware Configuration of Information Processing Apparatus]

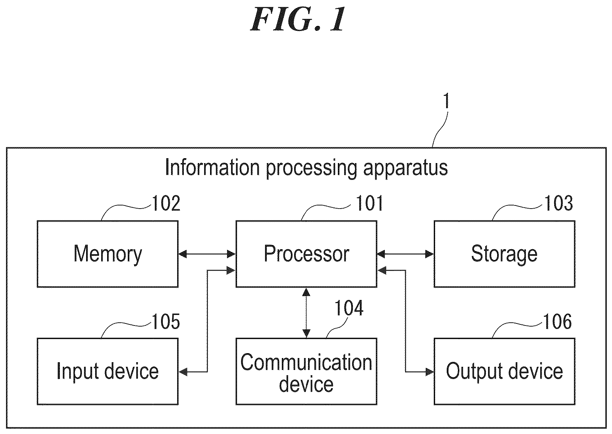

FIG. 1 illustrates a hardware configuration of an information processing apparatus 1. Physically, the information processing apparatus 1 is configured as a computer including a processor 101, a memory 102, a storage 103, a communication device 104, an input device 105, an output device 106, and a bus that connects these components. The information processing apparatus 1 may be, for example, a game console, a smartphone, or a tablet device.

Each function of the information processing apparatus 1 is realized by causing the processor 101 to execute predetermined software (a program) loaded on hardware such as the processor 101 and the memory 102, thereby controlling communications via the communication device 104 and controlling at least one of reading and writing of data in the memory 102 and the storage 103.

The processor 101 operates, for example, an operating system to control the entire computer. The processor 101 may be constituted by a central processing unit (CPU) including an interface to peripheral devices, a controller, an arithmetic unit, registers, and the like.

The memory 102 is a computer-readable recording medium and may be constituted by at least one of, for example, ROM (Read Only Memory), EPROM (Erasable Programmable ROM), EEPROM (Electrically Erasable Programmable ROM), and RAM (Random Access Memory). The memory 102 may also be referred to as registers, cache, or main memory (primary storage).

The storage 103 is a computer-readable recording medium and may be constituted by at least one of, for example, an optical disc such as a CD-ROM (Compact Disc ROM), a hard disk drive, a flexible disk, a magneto-optical disk (e.g., a compact disc, a digital versatile disc, a Blu-ray(registered trademark) disc), a smart card, flash memory (e.g., card, stick, key drive), a FLOPPY(registered trademark) disk, or a magnetic stripe. The storage 103 may be referred to as auxiliary storage.

The communication device 104 is hardware (a transceiver device) for communication between computers via at least one of wired and wireless networks, and is also called, for example, a network device, a network controller, a network card, or a communication module. The communication device 104 enables communication with a user terminal.

The input device 105 has a function of receiving a user's operation input and may be, for example, a cross-shaped key, a stick, buttons, and the like. The input device 105 may be a touch panel. The output device 106 has a function of displaying images, specifically a liquid-crystal screen or a display.

### [Functional Configuration of Information Processing Apparatus]

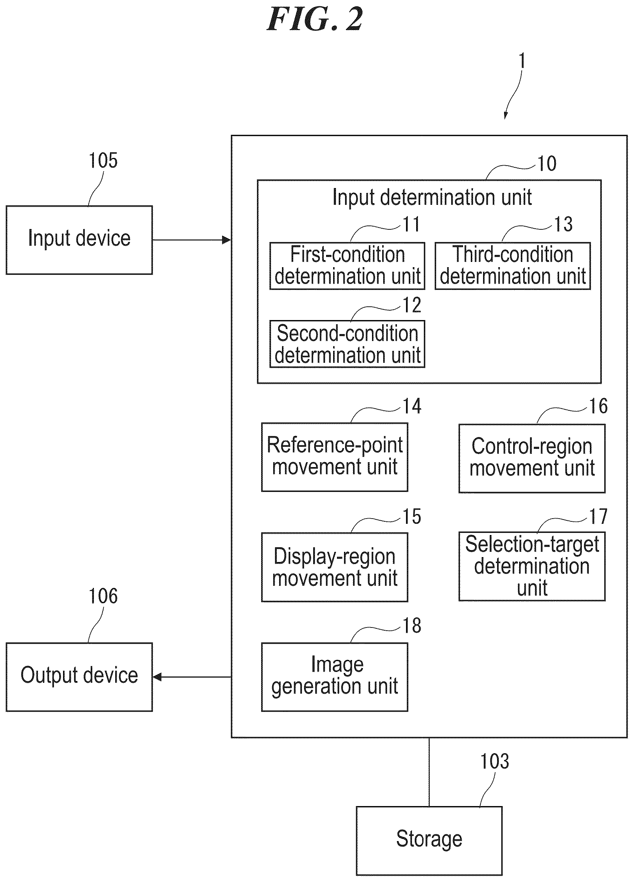

FIG. 2 illustrates functional blocks of the information processing apparatus 1 realized by executing the information processing program of the present embodiment. The information processing apparatus 1 has functions including an input determination unit 10, a reference-point movement unit 14, a display-region movement unit 15, a control-region movement unit 16, a selection-target determination unit 17, and an image generation unit 18.

### [Input Determination Unit]

The input determination unit 10 has a function of determining input contents based on directional inputs to the input device 105. The contents determined by the input determination unit 10 include three types: Repeat, Hold, and Trig. The input determination unit 10 includes a first-condition determination unit 11 that determines whether there has been a Repeat, a second-condition determination unit 12 that determines whether there has been a Hold, and a third-condition determination unit 13 that determines whether there has been a Trig.

"Trig" represents that there has been an input to a new direction. A "new direction" includes a case where the input direction has changed and also a case where there was no input and then a new input occurs. The input determination unit 10 receives data relating to operation inputs from the input device 105 for each frame. The third-condition determination unit 13, upon receiving directional-input data from the input device 105, determines whether an input in a direction different from the current directional input was made in the immediately preceding frame. If so, the third-condition determination unit 13 determines that the input is a Trig input. The third-condition determination unit 13 also determines that the input is a Trig input when there was no directional input in the immediately preceding frame. When there is a Trig input, the input determination unit 10 enables Trig. Specifically, the input determination unit 10 sets a flag indicating Trig is valid and stores data specifying the frame in which Trig became valid.

"Hold" represents that the input direction is being maintained. The second-condition determination unit 12, upon receiving directional-input data from the input device 105, determines whether an input in a direction different from the current directional input was made in the immediately preceding frame. If so, the second-condition determination unit 12 determines that the input is a Hold input. The second-condition determination unit 12 also determines that the input is a Hold input when there was no directional input in the immediately preceding frame. When there is a Hold input, the input determination unit 10 enables Hold. Specifically, the second-condition determination unit 12 sets a flag indicating Hold is valid and stores data specifying the frame in which Hold first became valid. The second-condition determination unit 12 deems Hold invalid and turns the Hold flag off when there is no directional input.

"Repeat" represents that the input direction has been maintained for a period longer than for Hold. The first-condition determination unit 11 has a Repeat counter and increments it upon receiving directional-input data. The first-condition determination unit 11 resets the Repeat counter when an input in a direction different from that in the immediately preceding frame is made or when there is a frame with no directional input. The first-condition determination unit 11 determines Repeat when the Repeat counter reaches a first value. Here, although the Repeat counter is used to determine Repeat, it determines whether the number of consecutive detections of input in the same direction has reached a first value, which is equivalent to determining whether there has been input in the same direction for a predetermined period.

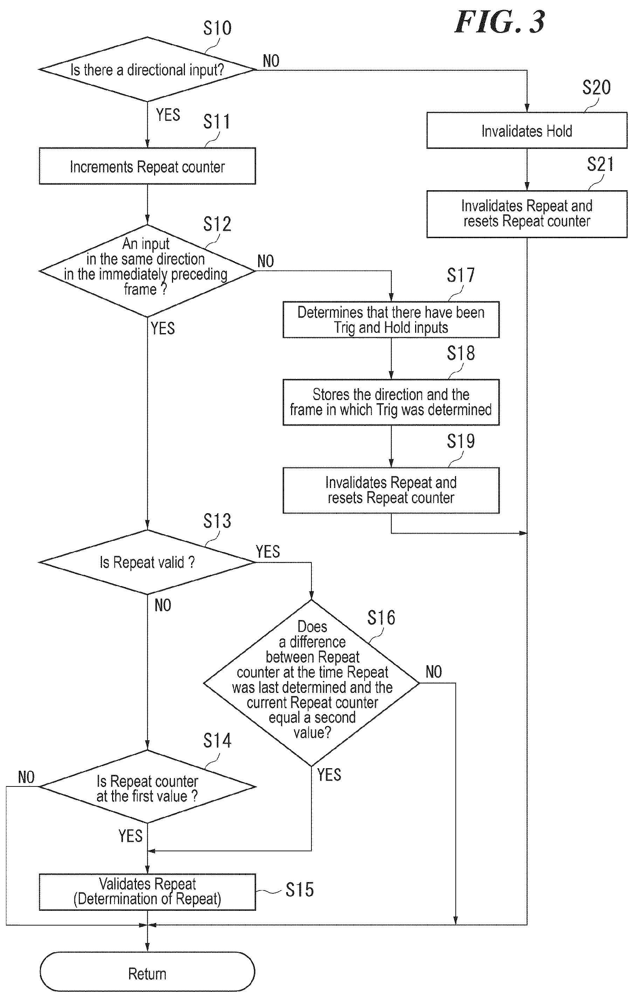

FIG. 3 is a flowchart illustrating input determination by the input determination unit 10. Based on a signal received from the input device 105, the input determination unit 10 determines whether there has been a directional input (S10). The series of operations shown in the flowchart of FIG. 3 is performed every frame. When there has been a directional input (YES at S10), the input determination unit 10 increments the Repeat counter (S11).

Next, the input determination unit 10 determines whether there was an input in the same direction in the immediately preceding frame (S12). When it is determined that there was no input in the same direction in the immediately preceding frame (NO at S12), the input determination unit 10 determines that there have been Trig and Hold inputs (S17). The input determination unit 10 stores the direction and the frame in which Trig was determined (S18). The input determination unit also invalidates Repeat and resets the Repeat counter (S19).

When it is determined at S12 that there was an input in the same direction in the immediately preceding frame (YES at S12), the input determination unit 10 determines whether Repeat is valid (S13). If Repeat is not valid (NO at S13), the input determination unit 10 determines whether the Repeat counter is at the first value (S14).

If the Repeat counter is at the first value (YES at S14), the input determination unit 10 determines that it is Repeat (S15) and validates Repeat.

If it is determined at S13 that Repeat is valid (YES at S13), the input determination unit 10 determines whether a difference between the Repeat counter at the time Repeat was last determined and the current Repeat counter equals a second value (S16). Here, the difference represents the elapsed time since Repeat was last determined. If the difference equals the second value (YES at S16), the input determination unit 10 determines Repeat (S15) and keeps Repeat valid. Comparing the first value for initially determining Repeat and the second value for determining Repeat while Repeat is valid, the second value is smaller than the first value. That is, once Repeat becomes valid, Repeat is determined even with a shorter duration of input in the same direction. Note that although an example is given in which the second value is smaller than the first value, the second value need not necessarily be smaller and may be equal to the first value, for example.

If it is determined at S16 that the difference between the Repeat counter at the time Repeat was last determined and the current Repeat counter is not the second value (NO at S16), the input determination unit 10 returns from processing and waits for data from the input device 105.

If it is determined at S10 that there is no directional input (NO at S10), the input determination unit 10 invalidates Hold (S20). Subsequently, the input determination unit 10 invalidates Repeat and resets the Repeat counter (S21).

### [Reference-Point Movement Unit]

The reference-point movement unit 14 has a function of moving a reference point based on a user's operation input. The "reference point" serves as a basis for scroll control and cursor movement control. The reference point is invisible and is not displayed as content.

An outline of scroll control and cursor movement control based on the reference point is described. The functions realized by executing the information processing program according to this embodiment include a control region for controlling whether scrolling is performed. The control region has a non-scrolling range and a scrolling range. Scrolling is not performed when the reference point is in the non-scrolling range, and scrolling is performed when the reference point is in the scrolling range. Further, in the functions realized by executing the program, when the reference point moves and comes into a predetermined positional relationship with a cursor-target element, the cursor is placed on that element; that is, the cursor moves in association with the movement of the reference point.

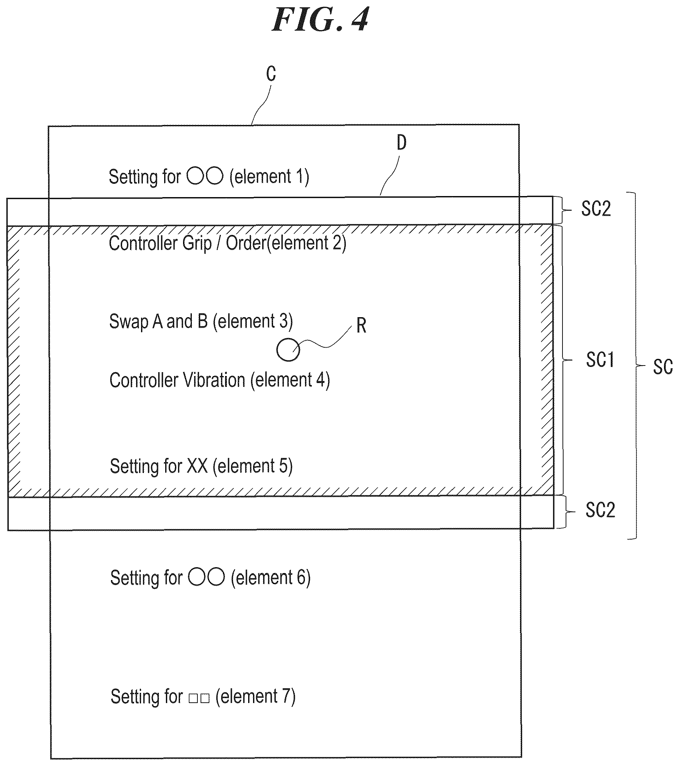

FIG. 4 illustrates content C, a display region D, and a control region SC. The content C is data to be displayed by scrolling. Examples of the content C include pages, items, and lists. FIG. 4 shows an example of page content C, and the page includes several elements. An element is a user interface component selectable by a button or the like. For example, to perform "Swap A and B," the cursor is placed on the element "Swap A and B" of element 3, and by pressing a button, the action "Swap A and B" can be executed. In this embodiment, an example is given in which the cursor is placed on elements.

The display region D is a region, among the content C, that is displayed on the screen. In the example of FIG. 4, the content C includes multiple elements related to settings. The portion of the content C displayed in the display region D is referred to as the content image. Regions of the content not overlapping the display region D are not output as an image and cannot be seen by the user.

Separately from the display region D, a control region SC is provided. In the example of FIG. 4, the control region SC overlaps the display region D; however, the control region SC need not necessarily overlap the display region D. The sizes of the control region SC and the display region D need not be the same, and either may be larger than the other. The control region SC has, at its center, a non-scrolling range SC1 and has scrolling ranges SC2 at the top and bottom. When the reference point R is within the non-scrolling range SC1, the display region D does not move and does not scroll. When the reference point R is within the scrolling range SC2, the display region D moves. For example, when the reference point R enters the lower scrolling range SC2, the display region D moves downward and scrolls downward. Although in this example the scrolling ranges SC2 are provided at the upper and lower edges of the control region SC, the scrolling ranges SC2 may be provided not only at the upper and lower edges but also at the left and right edges, or only at the left and right edges without being provided at the upper and lower edges.

The reference-point movement unit 14 moves the reference point R based on an operation input. The initial position of the reference point R is the center of the element at the very top of the content C. Thus, when the content is opened, the cursor can be aligned with the topmost element. As another example of the initial position, the center of the control region SC or the top of the control region SC may be used. Alternatively, the reference point R may not be placed until an operation input is made by the user, and the reference point may first appear when a directional input is made by the user. In this case, when the content is opened, the cursor is not aligned with any element.

When there is a downward directional input by the operation input, the reference point R moves downward; when there is an upward directional input, the reference point R moves upward. The reference point R may also move left and right. When directional inputs continue in the same direction, the reference-point movement unit 14 performs processing to move the reference point R at a constant speed. Note that because the display region D does not move when the reference point R is in the non-scrolling range SC1, moving the reference point at a constant speed does not necessarily mean that the display region D scrolls at a constant speed.

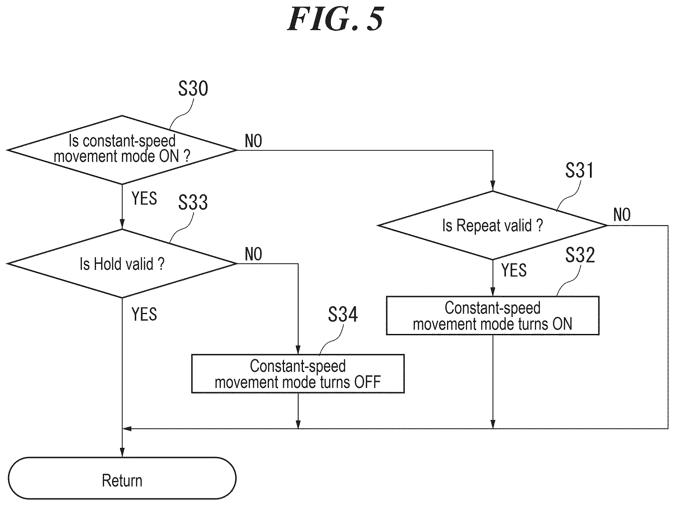

FIG. 5 is a flowchart illustrating operations for switching whether to perform constant-speed movement. The reference-point movement unit 14 determines whether a constant-speed movement mode is ON (S30). The constant-speed movement mode is a mode in which the reference point R is moved at a constant speed in a given direction. If the constant-speed movement mode is not ON (NO at S30), the reference-point movement unit 14 determines whether Repeat is valid (S31). If Repeat is valid (YES at S31), the reference-point movement unit 14 turns ON the constant-speed movement mode (S32), i.e., moves the reference point R at a constant speed in the input direction. If it is determined at S31 that Repeat is not valid (NO at S31), the reference-point movement unit 14 returns from processing.

If it is determined at S30 that the constant-speed movement mode is ON (YES at S30), the reference-point movement unit 14 determines whether Hold is valid (S33). If Hold is valid, the reference-point movement unit 14 returns from processing, i.e., continues the constant-speed movement mode. If it is determined at S33 that Hold is not valid (NO at S33), the reference-point movement unit 14 turns OFF the constant-speed movement mode (S34). That is, when there is an input in a direction different from that in the immediately preceding frame or when there was no directional input in the immediately preceding frame, the constant-speed movement mode is immediately stopped. Thus, a somewhat long press is required to transition into the constant-speed movement mode, while movement of the reference point can be promptly stopped when the long press is released.

When the constant-speed movement mode is stopped, the position of the reference point R remains at the position where it stopped. Alternatively, the reference point R may be returned to the center of the element currently under the cursor, or moved to the center of the nearest element.

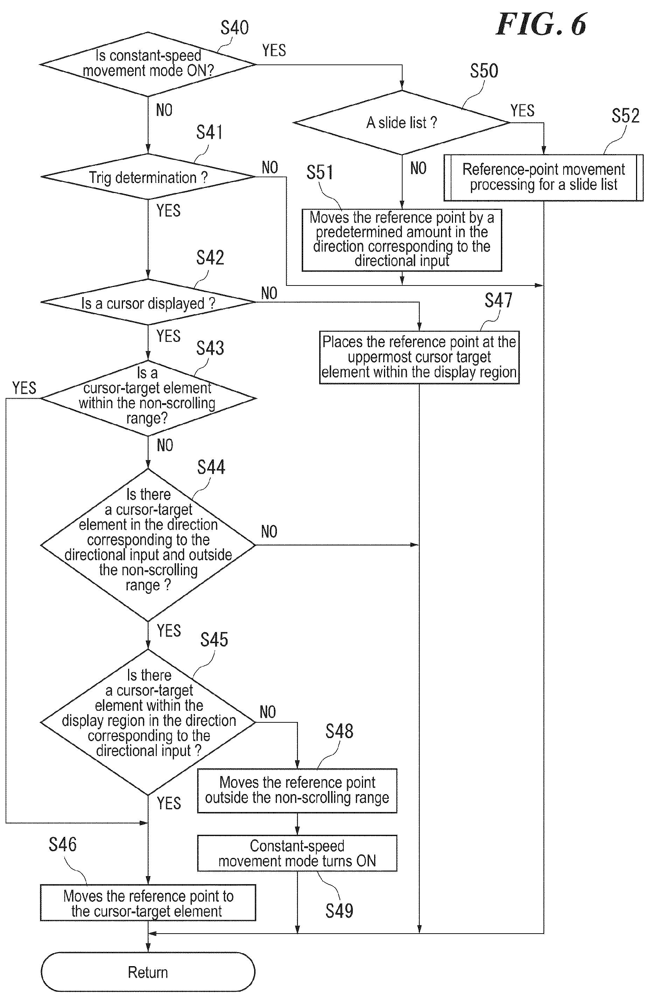

Next, with reference to FIG. 6, processing for moving the reference point R to achieve scrolling with improved operational feel will be described. The reference-point movement unit 14 determines whether the constant-speed movement mode is ON (S40). If the constant-speed movement mode is not ON (NO at S40), the unit determines whether a Trig determination has been made (S41). If no Trig determination has been made, the unit returns from processing. If a Trig determination has been made (YES at S41), it is determined whether a cursor is displayed within the display region D (S42). If no cursor is displayed within the display region D (NO at S42), the reference-point movement unit 14 places the reference point at the uppermost cursor-target element within the display region D (S47).

If it is determined at S42 that a cursor is already displayed (YES at S42), the reference-point movement unit 14 determines whether a cursor-target element is within the non-scrolling range SC1 (S43). If it is determined that a cursor-target element is within the non-scrolling range SC1 (YES at S43), the reference-point movement unit 14 moves the reference point R to the cursor-target element (S46).

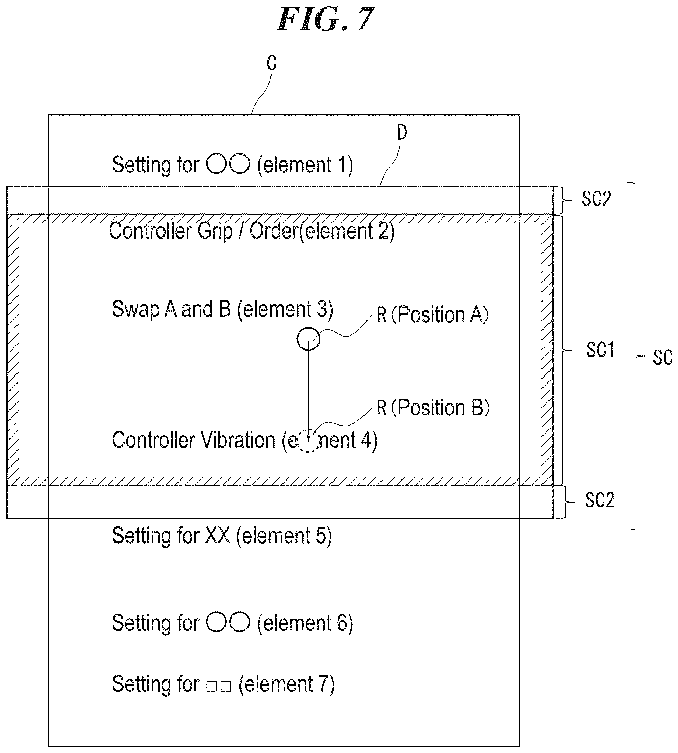

FIG. 7 illustrates an example of reference-point movement in this case. As shown in FIG. 7, initially, the reference point R is at a position A immediately below element 3, and a downward directional input is made in this state. There is element 4, which is a cursor-target element, within the non-scrolling range SC1 in the direction corresponding to the directional input. In this case, the reference point R moves to position B of element 4 within a single frame. That is, if the reference point R is at position A in one frame, it moves to position B in the next frame. For example, a single press of the directional-input button moves the reference point R to the position of element 4. If downward directional input continues, the reference point R moves downward according to the directional input, and when Repeat is validated, the reference point R moves downward at a constant speed.

If it is determined at S43 that no cursor-target element is within the non-scrolling range SC1 (NO at S43), the reference-point movement unit 14 determines whether, in the direction corresponding to the directional input and outside the non-scrolling range SC1, there is a cursor-target element (S44). If this is determined to be the case (YES at S44), the reference-point movement unit 14 determines whether there is a cursor-target element within the display region D in the direction corresponding to the directional input (S45). If there is a cursor-target element within the display region D (YES at S45), the reference-point movement unit 14 moves the reference point R to the cursor-target element (S46). Here, the reference point R is moved to the cursor-target element within one frame.

Since, at S46, the reference point R moves to the cursor-target element within one frame, its moving speed is faster than the speed at which the reference point R moves in the constant-speed movement mode. By performing such movement processing, when there is a cursor-target element in the direction corresponding to the directional input, the reference point moves immediately to the position of that element, and once Repeat is determined by subsequent inputs, the constant-speed movement mode starts. This enables scrolling convenient for a user who wants to check the next element. Although an example is given in which the reference point R moves all at once within one frame at S46, it may instead move rapidly to the next element without necessarily completing the move within one frame; in that case, it is desirable that the speed to the next element's position be faster than the speed in the constant-speed movement mode.

If it is determined at S45 that there is no cursor-target element within the display region D in the direction corresponding to the directional input (NO at S45), the reference-point movement unit 14 moves the reference point outside the non-scrolling range SC1 (S48). In this embodiment, it moves to the edge of the non-scrolling range SC1, i.e., the boundary between the non-scrolling range SC1 and the scrolling range SC2. Subsequently, the reference-point movement unit 14 turns ON the constant-speed movement mode (S49).

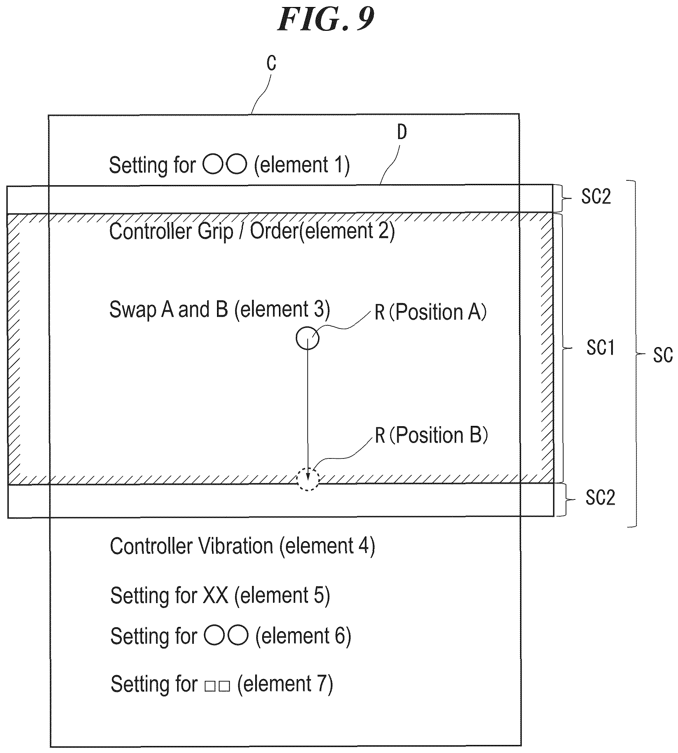

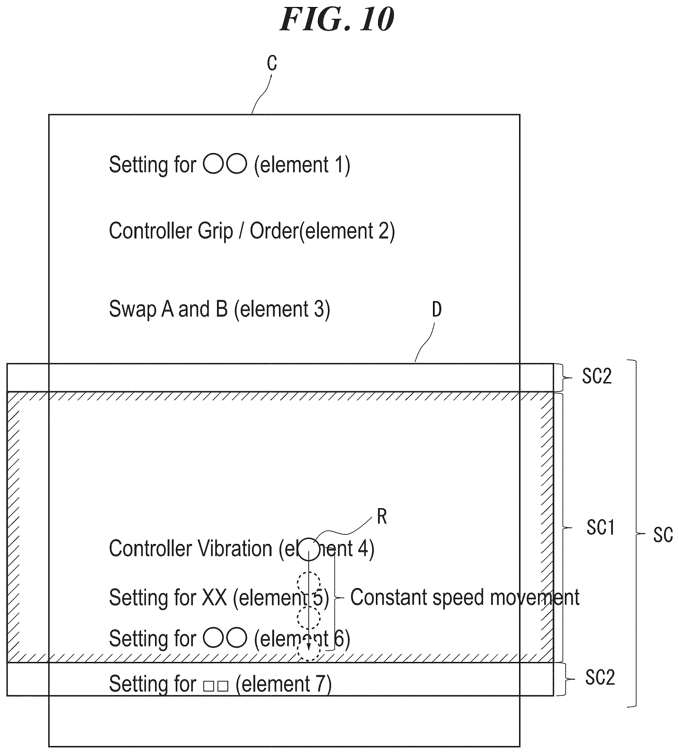

FIG. 9 illustrates an example of reference-point movement in this case. As shown in FIG. 9, the reference point R is at a position A immediately below element 3, and a downward directional input is made. There is no cursor-target element within the display region D in the direction corresponding to the directional input; instead, the cursor-target element 4 exists outside the display region D. In this case, the reference point R moves within one frame to the boundary between the non-scrolling range SC1 and the scrolling range SC2. The reference point R then enters the scrolling range SC2, so the display region D scrolls; with movement of the reference point R, the control region SC moves as shown in FIG. 10. Then the constant-speed movement mode starts, and the reference point R moves downward at a constant speed.

Returning to FIG. 6, when it is determined at S40 that the constant-speed movement mode is ON (YES at S40), the reference-point movement unit 14 determines whether the content C is a slide list (S50). Whether the content is a slide list is determined when the content is created. Data indicating the content type may be associated with the content, and the reference-point movement unit 14 may determine the content type based on that data. Alternatively, the reference-point movement unit 14 may determine whether elements in the content are arranged to satisfy predetermined conditions and determine that the content is a slide list when the conditions are satisfied.

If the content C is not a slide list (NO at S50), the reference-point movement unit 14 moves the reference point R by a predetermined amount in the direction corresponding to the directional input (S51). If the content C is a slide list (YES at S50), the unit performs reference-point movement processing for a slide list (S52).

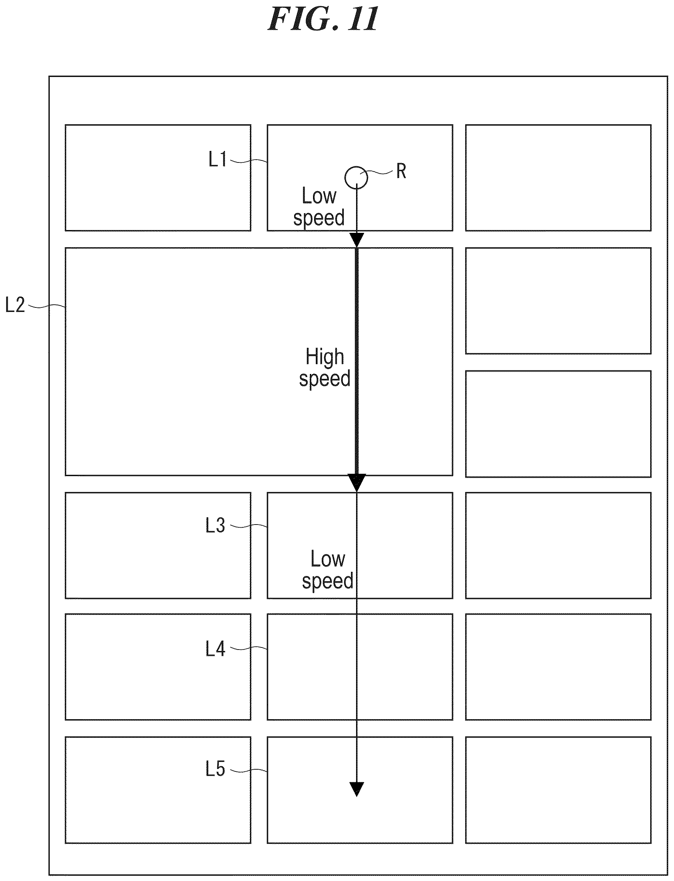

FIG. 11 illustrates the reference-point movement processing for a slide list. When the content C is a slide list, the movement speed of the reference point R is changed according to the element size. Slide L2 is larger than slides L1 and L3-L5. When the reference point R passes slide L2, it is moved faster than when passing L3-L5. If the reference point R is moved at a constant speed across the entire screen, the time required to pass a large slide becomes longer than that for a small slide, making the cursor movement accompanying the movement of the reference point feel slow. By moving the reference point at a speed adapted to the element size, comfortable cursor movement can be achieved.

### [Display-Region Movement Unit]

The display-region movement unit 15 has a function of moving the display region D relative to the content C based on a position of the reference point R within the control region SC. In principle, the display region D is not moved when the reference point R is within the non-scrolling range SC1, and is moved when the reference point R is within the scrolling range SC2. When the reference point R is within the upper scrolling range SC2, the display region D moves upward; when the reference point R is within the lower scrolling range SC2, the display region D moves downward.

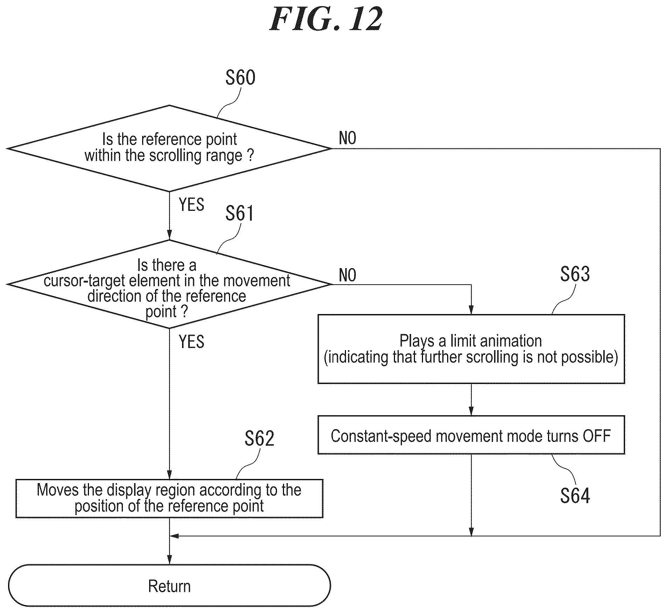

FIG. 12 is a flowchart illustrating scrolling processing. The display-region movement unit 15 determines whether the reference point R is within the scrolling range SC2 (S60). If it is determined that the reference point R is not within the scrolling range SC2 (NO at S60), the unit does not move the display region D and returns from processing.

If it is determined at S60 that the reference point R is within the scrolling range SC2 (YES at S60), the display-region movement unit 15 determines whether there is a cursor-target element in the movement direction of the reference point R (S61). If there is a cursor-target element in the movement direction (YES at S61), the display-region movement unit 15 moves the display region D according to the position of the reference point R (S62). If it is determined at S61 that there is no cursor-target element in the movement direction of the reference point R (NO at S61), the display-region movement unit 15 plays a limit animation (S63) indicating that further scrolling is not possible. Subsequently, the display-region movement unit 15 turns OFF the constant-speed movement mode (S64).

### [Control-Region Movement Unit]

The control-region movement unit 16 has a function of moving the control region SC based on the position of the reference point R. If the control region SC does not move at all, the reference point R goes out of the control region SC and proper control of whether to scroll cannot be performed. The control-region movement unit 16 moves the control region SC along with movement of the reference point R. In the information processing program of this embodiment, the control region SC is moved in the same manner as the display region D.

### [Selection-Target Determination Unit]

The selection-target determination unit 17 has a function of determining, among the plurality of elements in the content C, an element that has assumed a predetermined positional relationship with the reference point R as a selection target. The plurality of elements in the content C have hit-detection regions. When the reference point R overlaps an element's hit-detection region due to movement of the reference point R, it is determined that the selection condition for that element is satisfied, and that element is determined as the selection target.

However, if an element's hit-detection region does not lie on the trajectory of the reference point R, the element would not be determined as a selection target. Therefore, when the reference point R is moved by a predetermined distance without overlapping a hit-detection region, the selection-target determination unit 17 enlarges a search region for hit detection and determines whether there is an overlap with a hit-detection region. Specifically, the selection-target determination unit 17 sets a region defined by extending in a direction perpendicular to the movement direction of the reference point R, and determines that a second selection condition is satisfied when this region overlaps a hit-detection region, thereby determining the element as a selection target.

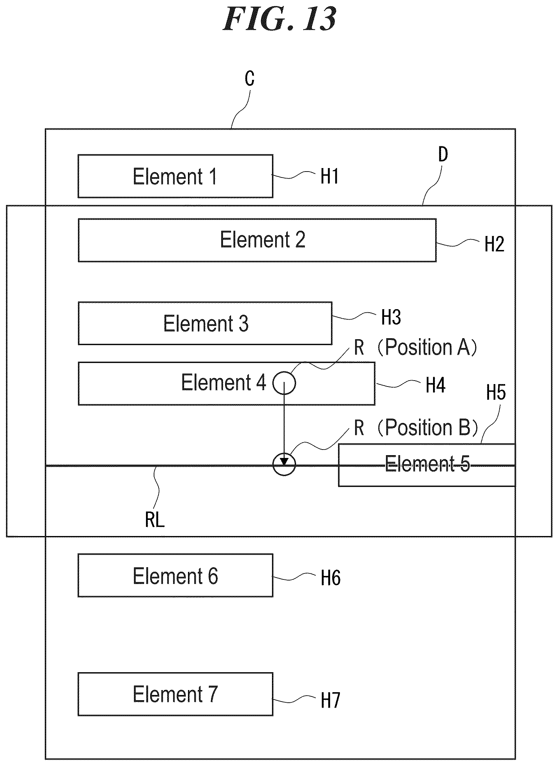

FIG. 13 is a diagram for explaining hit detection of the reference point R. As shown in FIG. 13, each element of the content C has hit-detection regions H1-H7. When the reference point R overlaps an element's hit-detection region, that element is determined to be a cursor-target element.

When the reference point R is at position A, it overlaps the hit-detection region H4 of element 4, and hence element 4 is determined to be a cursor-target element. When the reference point R moves downward from position A to position B, the reference point R itself does not overlap any element's hit-detection region. At position B, a reference line RL is extended in a direction perpendicular to the movement direction of the reference point R, and it is determined whether the reference line RL overlaps any hit-detection region. As a result, since the reference line RL overlaps the hit-detection region H5 of element 5, element 5 is determined to be a cursor-target element. Although in this embodiment the reference line RL is used when the reference point R does not overlap any element's hit-detection region, the hit detection may alternatively be performed from the outset by using the reference line RL and moving it in a direction orthogonal to the reference point's movement direction.

The image generation unit 18 has a function of generating the content image of the portion of the content C included in the display region D. When a selection-target element has been determined by the selection-target determination unit 17, the image generation unit 18 generates a content image in which it is visually recognizable that the element is selected. As a display mode for visually recognizing that an element is selected, decoration may be applied to the selected element, or the display of the selected element itself may be changed to stand out.

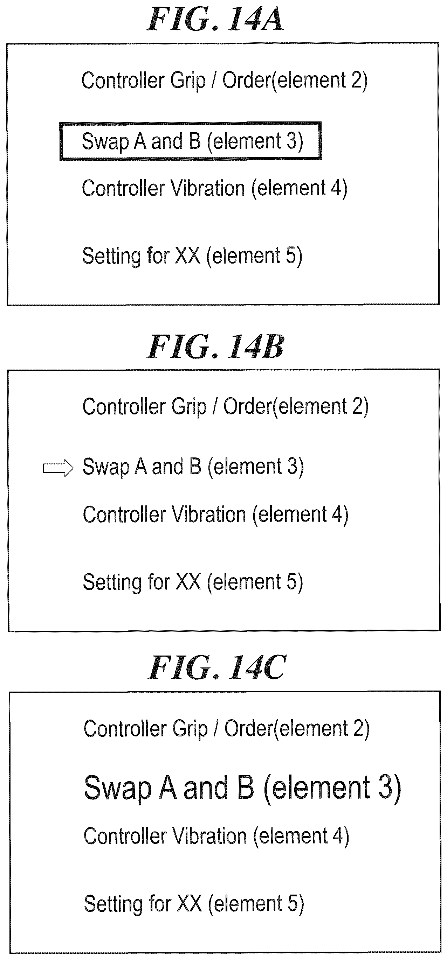

FIGS. 14A-14C illustrate examples of a content image in which it is visually recognizable that element 3 is selected. In FIG. 14A, the cursor is placed on element 3. In FIG. 14B, an arrow is displayed to the left of element 3. In FIG. 14C, the characters of element 3 are enlarged. In any of these modes, it is immediately apparent that element 3 is selected. Although not shown in FIGS. 14A-14C, the color of the selected element may be changed.

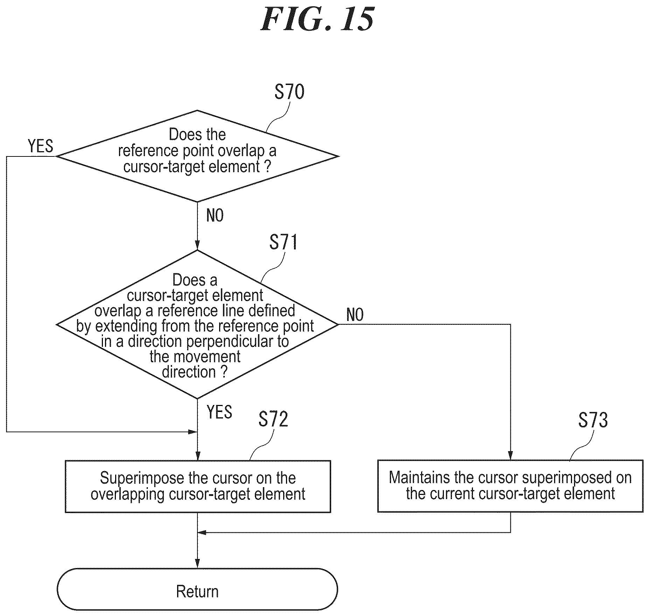

FIG. 15 is a flowchart illustrating operations of selection-target determination and image generation. In this flowchart, a display mode using a cursor is given as an example of a mode in which selection is visually recognizable. The selection-target determination unit 17 determines whether the reference point R overlaps a cursor-target element (S70), i.e., whether the reference point R overlaps an element's hit-detection region. If it is determined that the reference point R overlaps a cursor-target element (YES at S70), the image generation unit 18 generates a content image with the cursor superimposed on the overlapping cursor-target element (S72).

If it is determined that the reference point R does not overlap a cursor-target element (NO at S70), the selection-target determination unit 17 determines whether a cursor-target element overlaps a reference line RL defined by extending from the reference point R in a direction perpendicular to the movement direction (S71). If it is determined that the reference line RL overlaps a cursor-target element (YES at S71), a content image is generated with the cursor superimposed on the overlapping cursor-target element (S72). The selection-target determination unit 17 performs the determination of S71 at time intervals sufficiently small that the reference point R does not move across the width of an element in the movement direction during one interval. For example, if the element width is 10 pixels, the determination of S71 is performed every 3 pixels of movement of the reference point R.

If it is determined at S71 that the reference line RL does not overlap a cursor-target element (NO at S71), the image generation unit 18 maintains the image with the cursor superimposed on the current cursor-target element (S73).

In the user interface realized by the information processing program of this embodiment, the reference point R moves in response to a user's operation input, and when the reference point R overlaps an element's hit-detection region, that element is selected. With this configuration, when a direction is input by a user operation, elements are selected with timing that reflects distances between elements. In the example above, the cursor moves between elements according to the inter-element distances.

In the user interface according to this embodiment, scrolling starts when the reference point R enters the scrolling range SC2 from the non-scrolling range SC1. Therefore, when the cursor moves in a predetermined direction and approaches the edge of the display region, scrolling starts. Since both cursor movement and scrolling movement are controlled by the reference point R, the cursor movement speed does not change before and after the start of scrolling regardless of whether scrolling is being performed, thereby maintaining continuity of cursor movement.

In the user interface according to this embodiment, when there is no element in the non-scrolling range in the input direction and there is a cursor-target element within the display region D, the cursor moves to the next element in the input direction. Thus, highly operable cursor movement and scrolling aligned with the user's intention can be realized.

Although embodiments of the present disclosure concerning a non-transitory computer-readable medium, an information processing apparatus, and an information processing method have been described in detail above, the present disclosure is not limited to the embodiments described above.

In the above embodiment, an example is given in which the input determination unit 10 validates Hold when an operation input in a direction different from the input direction in the immediately preceding frame is received, and invalidates Hold when there is no directional input. Alternatively, Hold determination may be made based on the duration of input in the same direction after a Trig determination. As one example, the input determination unit 10 may determine Hold when an input in the same direction is made after a predetermined time has elapsed since a Trig determination based on a predetermined directional input (the predetermined time being shorter than the time for determining Repeat). The elapsed time may be measured by resetting a counter when Trig is determined and incrementing the counter with the lapse of frames.

### Description of Reference Numerals

1 Information processing apparatus
10 Input determination unit
11 First-condition determination unit
12 Second-condition determination unit
13 Third-condition determination unit
14 Reference-point movement unit
15 Display-region movement unit
16 Control-region movement unit
17 Selection-target determination unit
18 Image generation unit
101 Processor
102 Memory
103 Storage
104 Communication device
105 Input device
106 Output device

## Claims

1. An information processing program that, when executed by a computer of an information processing apparatus, causes the computer to function as:
an image generation unit configured to generate, as a content image, an image of a portion of the content including a plurality of elements that overlaps the display region;
a reference-point movement unit configured to move a reference point based on a user's operation input;
a display-region movement unit configured to move the display region relative to the content based on a position of the reference point within a control region;
a control-region movement unit configured to move the control region relative to the content based on a position of the reference point; and
a selection-target determination unit configured to determine, among the plurality of elements, an element that has come into a predetermined positional relationship with the reference point as a selection target;
wherein the image generation unit further generates the content image in which the selection-target element is visually recognizable as selected.

2. The information processing program according to claim 1, wherein the computer is further configured to function as a first-condition determination unit configured to determine whether a first condition is satisfied based on a user's operation input;
wherein the display-region movement unit further moves the display region based at least in part on the reference point having moved within the control region from a first range to a second range;
wherein the control-region movement unit further moves the control region based at least in part on movement of the reference point within the control region from a first range within the control region to a second range within the control region;
wherein the reference-point movement unit moves the reference point at a predetermined speed regardless of its position within the control region when the first condition is satisfied.

3. The information processing program according to claim 2, wherein the computer is further configured to function as a second-condition determination unit configured to determine whether a second condition, different from the first condition, is satisfied based on a user's operation input;
wherein the reference-point movement unit stops movement of the reference point in response to the second condition no longer being satisfied.

4. The information processing program according to claim 3, wherein the computer is further configured to function as a third-condition determination unit configured to determine whether a third condition is satisfied, the third condition being satisfied when, upon a predetermined directional input being made by a user, no input in the same direction as the predetermined directional input has been made immediately before the predetermined directional input;
wherein the first-condition determination unit determines that the first condition is satisfied when, after a predetermined time has elapsed since a determination that the third condition is satisfied based on a predetermined directional input, an input is made in the same direction as the predetermined directional input;
wherein the second-condition determination unit determines that the second condition is satisfied when, upon a predetermined directional input being made, no input in the same direction as the predetermined directional input has been made immediately before the predetermined directional input; and
determines that the second condition is no longer satisfied when, after a determination that the second condition is satisfied, a determination is made that no directional input is being made.

5. The information processing program according to claim 3, wherein the computer is further configured to function as a third-condition determination unit configured to determine whether a third condition is satisfied, the third condition being satisfied when, upon a predetermined directional input being made by a user, no input in the same direction as the predetermined directional input has been made immediately before the predetermined directional input;
wherein the first-condition determination unit determines that the first condition is satisfied when, after a predetermined time has elapsed since a determination that the third condition is satisfied based on a predetermined directional input, an input is made in the same direction as the predetermined directional input;
wherein the second-condition determination unit determines that the second condition is satisfied when, after a second predetermined time, shorter than the predetermined time, has elapsed since a determination that the third condition is satisfied based on the predetermined directional input, an input is made in the same direction as the predetermined directional input.

6. The information processing program according to claim 2, wherein the reference-point movement unit, based on a determination that a predetermined condition is satisfied in response to a user's directional input, further moves the reference point to a position corresponding to an element located in a direction based on the directional input.

7. The information processing program according to claim 6, wherein the reference-point movement unit, when moving the reference point based on the predetermined condition being satisfied, moves the reference point at a speed faster than the predetermined speed.

8. The information processing program according to claim 6, wherein, responsive to (i) a determination that the predetermined condition is satisfied and (ii) a subsequent determination that the first condition is satisfied, the reference-point movement unit moves the reference point, based on the determination that the predetermined condition is satisfied, to a position corresponding to an element located in the direction indicated by the directional input at a speed faster than the predetermined speed, and thereafter moves the reference point in the input direction at the predetermined speed.

9. The information processing program according to claim 1, wherein the selection-target determination unit determines the element as the selection target when a first selection condition is satisfied, the first selection condition being satisfied when movement of the reference point causes the element's hit-detection region to overlap the reference point; and
when the first selection condition is not satisfied as a result of movement of the reference point, determines the element as the selection target when a second selection condition is satisfied, the second selection condition being satisfied when the element's hit-detection region overlaps a region defined by extending from the reference point in a direction perpendicular to a movement direction of the reference point.

10. The information processing program according to claim 1, wherein the image generation unit further generates the content image not including the reference point.

11. The information processing program according to any one of claim 1-10, wherein the reference-point movement unit moves the reference point at a speed corresponding to element sizes when the content is of a predetermined type.

12. An information processing system, comprising:
a processor and a memory coupled thereto, the processor being configured to control the information processing system to at least
generate, as a content image, an image of a portion of the content including a plurality of elements that overlaps the display region;
move a reference point based on a user's operation input;
move the display region relative to the content based on a position of the reference point within a control region;
move the control region relative to the content based on a position of the reference point; and
determine, among the plurality of elements, an element that has come into a predetermined positional relationship with the reference point as a selection target;
wherein generating the content image further comprises generating the content image in which the selection-target element is visually recognizable as selected.

13. A processing method performed using a processing system comprising a processor, the processing method comprising:
generating, as a content image, an image of a portion of the content including a plurality of elements that overlaps the display region;
moving a reference point based on a user's operation input;
moving the display region relative to the content based on a position of the reference point within a control region;
moving the control region relative to the content based on a position of the reference point;
determining, among the plurality of elements, an element that has come into a predetermined positional relationship with the reference point as a selection target; and
generating the content image in which the selection-target element is visually recognizable as selected.
